# EUROPÄISCHE PATENTSCHRIFT

(11) **EP 0 894 215 B1**
(45) Veröffentlichungstag und Bekanntmachung des Hinweises auf die Patenterteilung: **31.10.2001**
(21) Anmeldenummer: 97914288.2
(22) Anmeldetag: 21.03.1997
(51) Int. Cl.: F16K 15/02, F16K 24/02, F01M 11/00

(54) **VENTIL FÜR FLÜSSIGKEITEN**
VALVE FOR LIQUIDS
SOUPAPE POUR LIQUIDES

(30) Priorität: 26.04.1996 DE 19616646
(43) Veröffentlichungstag der Anmeldung: 03.02.1999
(73) Patentinhaber: FILTERWERK MANN & HUMMEL GMBH, 71638 Ludwigsburg (DE)
(72) Erfinder: BRÜGGEMANN, Hans, D-73650 Winterbach (DE); KLOTZ, Arthur, D-71686 Remseck (DE); LEIPELT, Rudolf, D-71672 Marbach (DE)
(74) Vertreter: Voth, Gerhard, Dipl.-Ing.
(86) Internationale Anmeldenummer: EP9701444
(87) Internationale Veröffentlichungsnummer: WO9741373

(56) Entgegenhaltungen:
- EP-A- 0 289 386
- DE-A- 3 613 093
- DE-B- 1 104 279
- DE-C- 19 547 493
- GB-A- 2 206 674
- US-A- 3 434 494
- US-A- 4 457 334

## Beschreibung

Die Erfindung betrifft ein Ventil für Flüssigkeiten entsprechend den im Oberbegriff von Anspruch 1 definierten Merkmalen und wie es beispielsweise aus der GB-A-2 206 674 bekannt ist.

Diese Druckschrift zeigt ein Gassteuerventil, bei dem der anstehende Gasdruck zum Öffnen bzw. Schließen genutzt wird. Zweck des Ventils ist das Verschließen der Gasleitung bei einem unzulässigen Über- bzw. Unterdruck.

Aus dem US-Patent 4 457 334 ist ein drucksensierendes Ventil bekannt. Auch dort wird eine Leitung geschlossen, wenn eine bestimmte Druckdifferenz an einer Auslöseeinheit anliegt.

Die bekannten Ventile werden bei einem Druck ausgelöst, der oberhalb oder unterhalb eines Solldrucks liegt. Diese Ventile sind für die Ausführung der vorliegenden Erfindung nicht geeignet.

Ein weiteres Ventil ist beispielsweise aus der DE-OS 36 13 093 bekannt. Dort ist dieses Ventil in einem Ölfilter angeordnet und dient als Auslaufsperrventil für die Reinflüssigkeit. Außerdem ist dort ein weiteres Rücklaufsperrventil für die Rohflüssigkeit vorgesehen.

Bei der Inbetriebnahme eines Ölkreislaufs, insbesondere bei einer Brennkraftmaschine, befindet sich zunächst noch kein Öl in den Förderleitungen und in den ölführenden und ölversorgenden Teilen, d. h. auch die Ölpumpe ist noch nicht mit Öl befüllt. Wird nun die Ölpumpe in Betrieb gesetzt, so muß diese zunächst gegen den Widerstand dieses Rücklaufsperrventils die Luft aus den Leitungen treiben. Dies kann längere Zeit in Anspruch nehmen, in welcher die Brennkraftmaschine ohne Ölversorgung ist. Zur Vermeidung dieses Nachteils könnte es evtl. zweckmäßig sein, die ölführenden Leitungen vorab mit Öl zu befüllen. Dies erfordert jedoch einen hohen zeitlichen Aufwand.

Der Erfindung liegt die Aufgabe zugrunde, die genannten Nachteile zu vermeiden und dafür zu sorgen, daß der Ölkreislauf möglichst rasch in Gang kommt.

Diese Aufgabe wird durch die Merkmale des Anspruchs 1 sowie durch die Merkmale des nebengeordneten Verwendungsanspruchs 4 gelöst.

Der wesentliche Vorteil der Erfindung ist darin zu sehen, daß das Ventil sich zunächst in einer Offenstellung befindet. Erst wenn eine Entriegelung des Ventils stattfindet, bewegt sich dieses in die Schließstellung und erzeugt damit die Sperrwirkung. Durch die Offenstellung des Ventils ist gewährleistet, daß Luft, die sich in dem System befindet, sehr rasch und ohne Gegendruck entweichen und damit Flüssigkeit nachströmen kann.

Gemäß der Erfindung bewirkt der Flüssigkeitsdruck der nachströmenden Flüssigkeit eine Bewegung des Ventilkörpers entgegen der Raststellung, so daß dieser Ventilkörper ausrastet und in die normale Stellung bewegt wird.

Weiterhin sieht die Erfindung vor, daß das Rastmittel für den Ventilkörper ein an dem Ventilgehäuse angeordneter Rastnocken ist. In diesen Rastnocken greift eine Nut oder Öffnung des Ventilkörperschaftes ein, so daß eine bajonettartig wirkende Halterung des Ventilkörpers für die Offenstellung gebildet wird. Selbstverständlich besteht auch die Möglichkeit, das Rastmittel als Rastnocken auf dem Ventilkörper und als Öffnung auf dem Ventilgehäuse auszubilden.

Die Rastmittel sind in einer vorteilhaften Weiterbildung so gestaltet, daß durch den Flüssigkeitsdruck eine Drehbewegung auf den Ventilkörper erzeugt wird, und zwar so, daß die Hubbewegung durch eine zwangsweise Führung der Rastmittel auf einer wendelartigen Gleitbahn in eine Drehbewegung gewandelt wird. Damit wird der Ventilkörper aus der Raststellung bewegt.

Eine weitere Ausgestaltung der Erfindung sieht vor, den Ventilkörper mit flügelartigen Elementen zu versehen. Diese Elemente dienen dazu, den Ventilkörper in einer Lage zu halten bzw. zu drehen, die von der Raststellung entfernt ist. Damit wird ein späteres unbeabsichtigtes Einrasten des Ventilkörpers wirksam verhindert.

Das Ventil wird in vorteilhafter Weise in dem Ölkreislauf für die Ölversorgung einer Brennkraftmaschine angewendet und befindet sich bei der Inbetriebnahme des Motors zunächst in der Offenstellung. Sobald Öl durch die Ölpumpe gefördert wird, rastet der Ventilkörper für immer aus der Offenstellung aus und bewegt sich in die normale Betriebsstellung.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand von Ausführungsbeispielen näher dargestellt. Es zeigt
- Figur 1: ein Ventil für Flüssigkeiten in einer Schnittdarstellung,
- Figur 1a bis Figur 1e: das Ventil gemäß Figur 1 in verschiedenen Betriebsstellungen in Detailansichten,
- Figur 2: eine Variante des in Figur 1 gezeigten Ventils,
- Figur 3: eine Variante eines Ventils,
- Figur 3a und b: Detailansichten des in Figur 3 gezeigten Ventils,
- Figur 4: die schematische Darstellung eines Ölkreislaufs.

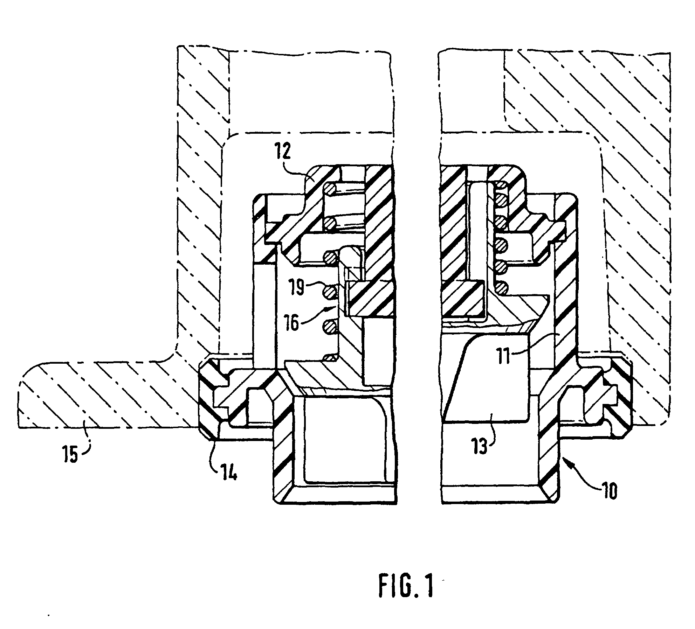

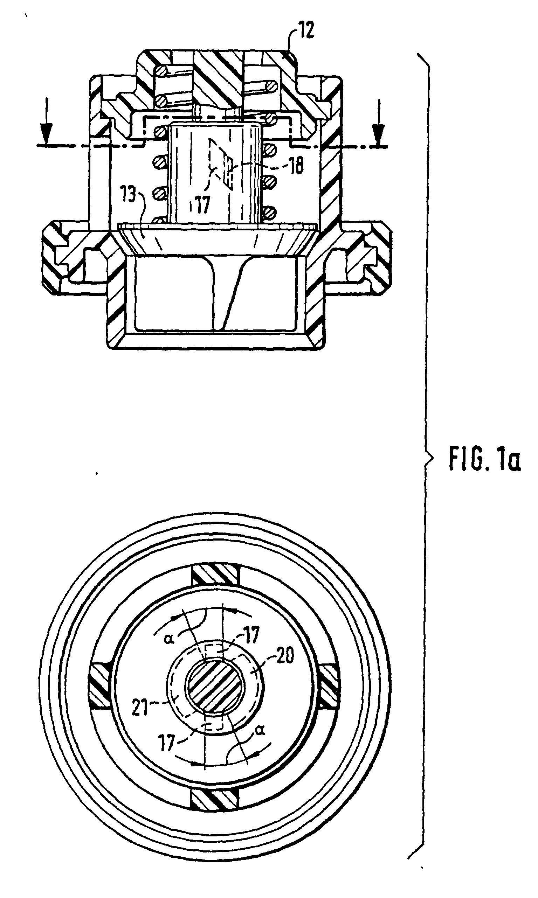

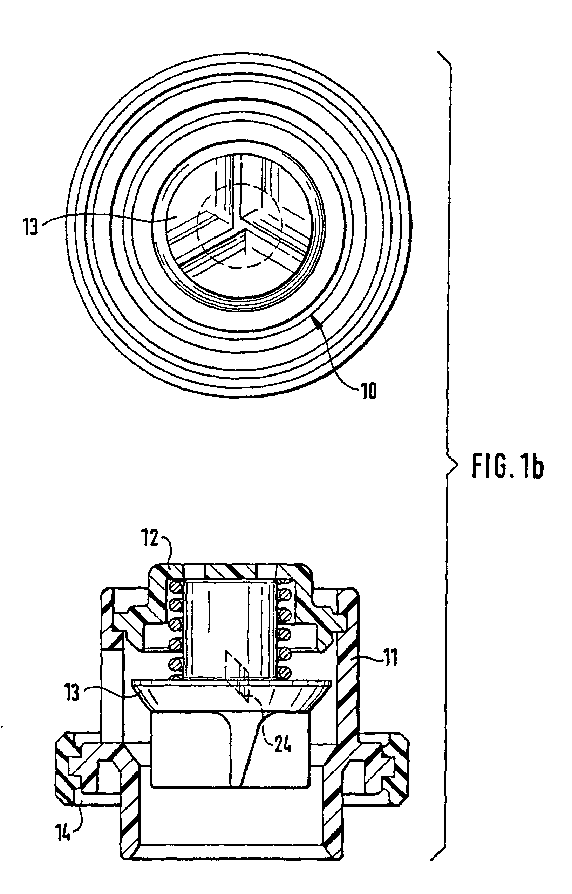

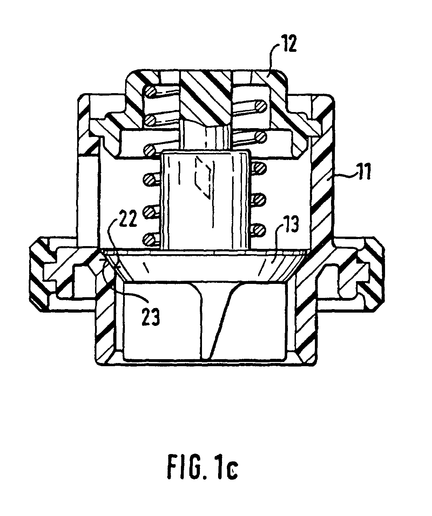

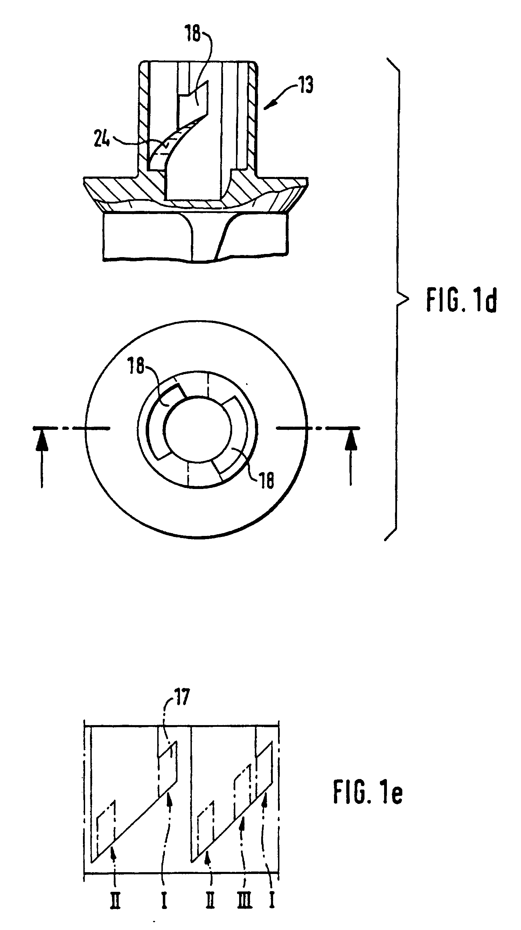

Das Ventil gemäß Figur 1 besteht aus einem Ventilgehäuse 10. Dieses Ventilgehäuse 10 ist ein- oder zweiteilig ausgestaltet und weist einen Gehäusezylinder 11 sowie ein Gehäuseoberteil 12 auf. Gehäusezylinder 11 und Gehäuseoberteil 12 sind beispielsweise jeweils Kunststoffspritzgießteile, die miteinander verschnappt oder verschweißt sind. In dem Ventilgehäuse befindet sich ein Ventilkörper 13. Das Ventil wird über eine Dichtung 14 an einem hier strichpunktiert dargestellten Gehäuse oder Rohr 15 befestigt. Der linksseitige Halbschnitt der Figur 1 zeigt den Ventilkörper 13 in einer Offenstellung. Diese Offenstellung wird durch die Rastverbindung mittels der Rastmittel 16 bewirkt. Die Rastmittel 16 bestehen aus zwei an dem Gehäuseoberteil angeordneten Rastnocken 17. Diese Rastnocken 17 greifen in Nuten 18 des Ventilkörpers 13 ein. Der rechtsseitige Halbschnitt zeigt das Ventil vollständig geöffnet. Hier ist der Ventilkörper 13 entgegen der Federkraft der Feder 19 am oberen Anschlag. Diese Stellung bewirkt gleichzeitig eine Entriegelung des Ventilkörpers, d. h. ein Lösen der Rastmittel 16. Dies wird nachfolgend in den Figuren 1a bis e näher dargestellt. Gleiche Teile sind mit gleichen Bezugszeichen versehen.

Figur 1a zeigt nochmals die Offenstellung gemäß dem linken Halbschnitt der Figur 1. Der Rastnocken 17 des Gehäuseoberteils 12 befindet sich in der Nut 18 des Ventilkörpers 13. In der Draufsicht ist ersichtlich, daß sich die Nut 18 lediglich über den Winkelbereich α des Ventilkörpers erstreckt. Sobald der Ventilkörper nach oben bewegt wird, gleitet er gemäß Figur 1b auf einer Gleitfläche 24 entlang, so daß sich der Ventilkörper innerhalb des Ventilgehäuses dreht. Diese Drehbewegung bewirkt ein Herausdrehen der Rastnocken 17 über den Winkel α hinaus und damit ein Freiwerden der Rastnocken in die Bereiche 20, 21 hinein. Aus diesen Bereichen heraus kann der Ventilkörper gemäß Figur 1c sich vollständig nach unten bewegen und Ventilwirkung entfalten, d. h. er schließt die Öffnung zwischen den Ventilflächen 22, 23 ab.

Figur 1d zeigt eine Detaildarstellung des Ventilkörpers 13. Hier sind deutlich sowohl die Nut 18 als auch die Gleitfläche 24 zu sehen.

Figur 1e zeigt die Schaltkulisse abgewinkelt mit verschiedenen Stellungen des Rastnockens 17 zunächst in der Raststellung I und anschließend in der Offenstellung II. Bereits nach 45 ° ist der Ventilkörper entriegelt. Die Stellung III genügt bereits, damit der Ventilkörper in seine normale Betriebsart übergehen kann.

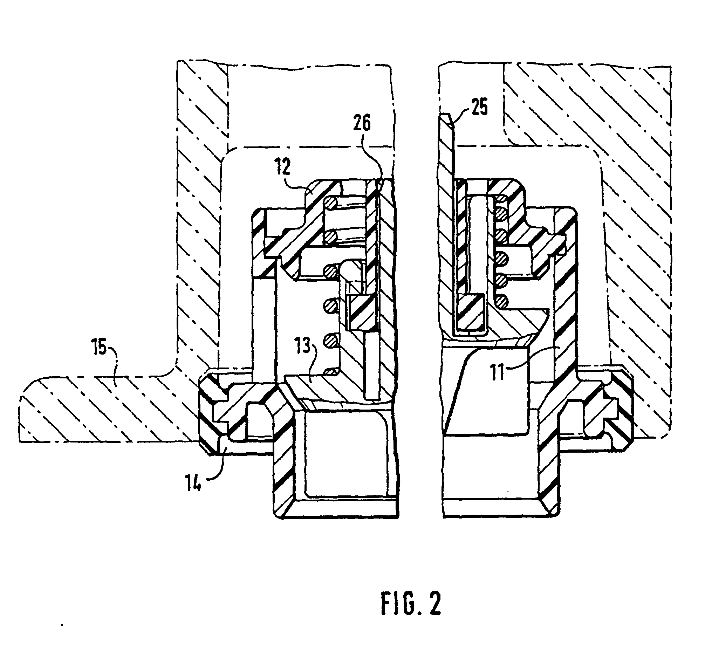

Figur 2 zeigt eine Variante eines Ventils. Dort ist zum Schutz gegen ein mögliches Verkanten der Ventilkörper 13 mit einem Führungsstift 25 ausgestattet. Dieser Führungsstift gleitet in einer Öffnung 26 des Gehäuseoberteils 12. Die Funktionsweise des Ventils in Figur 2 entspricht dem in Figur 1 gezeigten Prinzip.

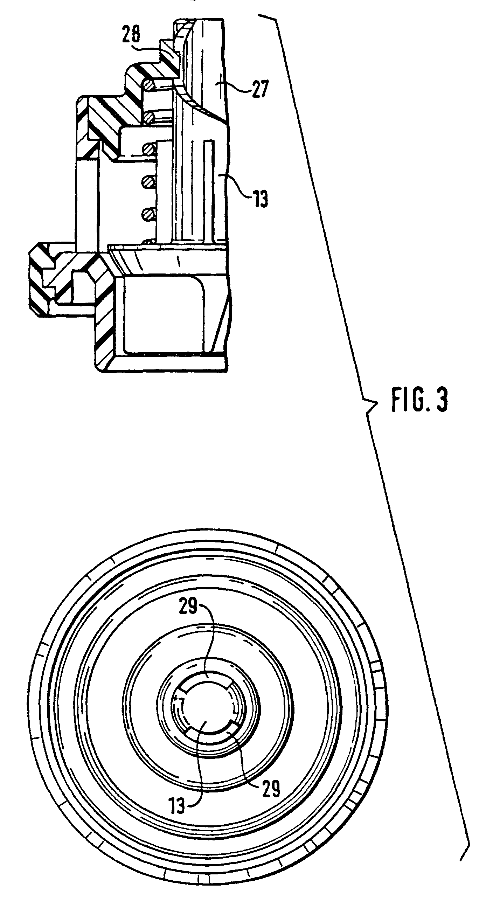

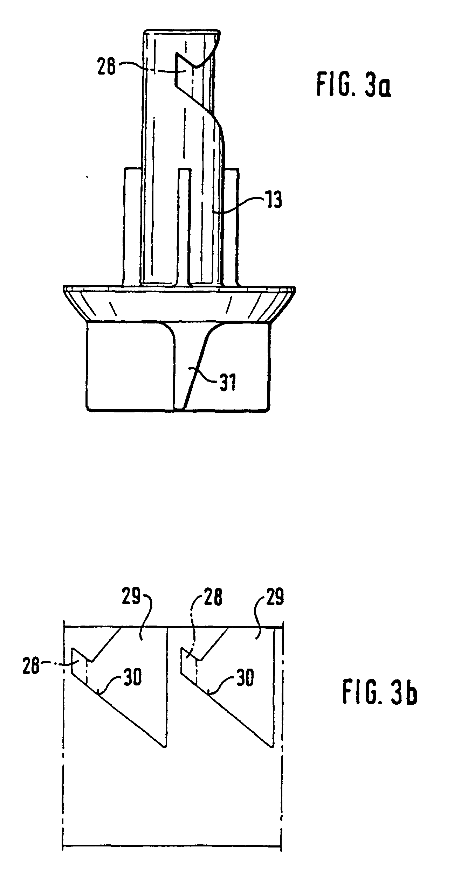

Figur 3 zeigt eine Variante, bei welcher die Schaltkulisse außen auf dem Ventilschaft 27 des Ventilkörpers 13 angeordnet ist. Hier weist das Gehäuseoberteil 12 den entsprechenden Rastnocken 28 auf. Dieser Rastnocken 28 greift gemäß Figur 3a in die Nut der Schaltkulisse des Ventilschafts 27.

In der Abwicklung gemäß Figur 3b ist die Nut 29 sowie der Rastnocken 28 dargestellt. Auch hier bewirkt ein Flüssigkeitsdruck einer von unten einströmenden Flüssigkeit das Anheben des Ventilkörpers. Damit gleitet der Rastnocken 28 auf der Gleitfläche 30 entlang, und es findet eine Entriegelung des Ventilkörpers statt.

Der Ventilkörper ist in der in Figur 3a gezeigten Darstellung mit einem oder mehreren flügelartigen Elementen 31 versehen. Durch das Einströmen der Flüssigkeit von unten bewirkt das flügelartige Element eine Drehbewegung entgegen der Raststellung, so daß die Raststellung nach Inbetriebnahme des Ventils nicht mehr erreicht wird.

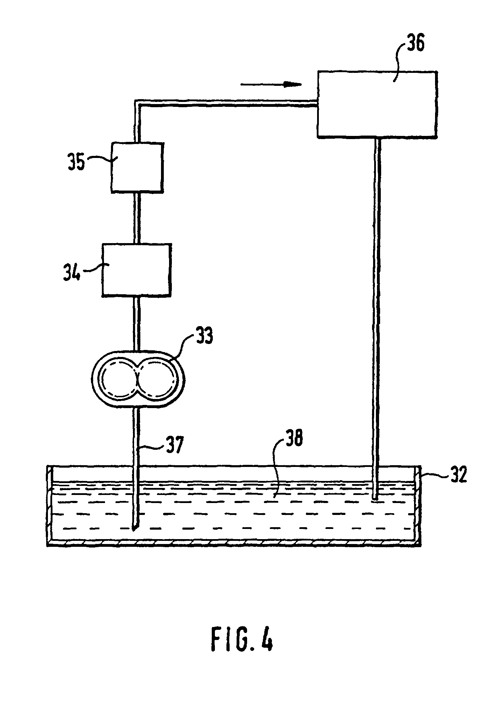

Figur 4 zeigt eine Prinzipskizze eines Ölkreislaufs, in welchem ein Ventil gemäß den Figuren 1, 2 oder 3 angeordnet ist. Oberhalb einer Ölwanne befindet sich eine Zahnradpumpe. Diese fördert Öl über ein Rücklaufsperrventil 34, welches die beschriebenen Merkmale aufweist, und ein Filter 35 zu Schmierstellen 36. Von dort gelangt das Öl wieder zurück in die Ölwanne.

Bei der ersten Inbetriebnahme befindet sich in den Leitungen 37 noch Luft. Die Zahnradpumpe 33 muß zunächst einen Unterdruck erzeugen, der ausreicht, damit das in der Ölwanne 32 sich befindliche Öl 38 zur Zahnradpumpe gelangt. Damit oberhalb der Zahnradpumpe kein Gegendruck entsteht bzw. der Gegendruck möglichst gering ist, befindet sich das Rücklaufsperrventil in der in Figur 1, 2 oder 3 gezeigten Offenstellung.

## Patentansprüche

1. Ventil für Flüssigkeiten bestehend aus einem Ventilgehäuse (10) und einem Ventilkörper (13), welcher in dem Ventilgehäuse geführt ist, wobei wenigstens ein Rastmittel (16) in Form mindestens eines Rastnockens (17;28) vorgesehen ist, mittels dessen der Ventilkörper (13) im Ventilgehäuse (10) in einer Offenstellung gehalten werden kann,
**dadurch gekennzeichnet, daß** das Ventil desweiteren eine wendelartige Gleitbahn (24;30) derart aufweist, daß bei einem durch die Flüssigkeit erzeugten Flüssigkeitsdruck oberhalb eines bestimmten Wertes die axiale Arretierung des Ventilkörpers (13) im Ventilgehäuse (10) ausrastet, wobei die zum Ausrasten nötige Drehbewegung erzeugt wird aus der Hubbewegung beim weiteren Öffnen des Ventilkörpers (13), und zwar durch eine zwangsweise Führung des mindestens einen Rastnockens (17;28) auf der wendelartigen Gleitbahn (24;30).

2. Ventil nach Anspruch 1, **dadurch gekennzeichnet, dass** der Rastnocken (17) in eine Nut (18) oder Öffnung des Ventilkörpers eingreift und sich darin bajonettartig verhakt.

3. Ventil nach einem der vorherigen Ansprüche, **dadurch gekennzeichnet, dass** an dem Ventilkörper (13) in Anströmrichtung flügelartige Elemente (31) vorgesehen sind, die den Ventilkörper (13) in einer entgegen der Raststellung gerichteten Lage hält.

4. Verwendung eines Ventils nach einem der vorherigen Ansprüche in einem Ölkreislauf für die Ölversorgung einer Brennkraftmaschine, wobei sich das Ventil bei der Inbetriebnahme des Motors zunächst in der Offenstellung befindet und sobald Öl (38) durch die Ölpumpe (33) gefördert wird, für immer aus der Offenstellung ausrastet.

## Claims

1. Valve for liquids, comprising a valve housing (10) and a valve body (13), which is guided in the valve housing, at least one locking means (16) being provided in the form of at least one locking cam (17;28), the valve body (13) being able to be kept in an open position in the valve housing (10) by means of said cam, **characterised in that** the valve also has a helical guide path (24;30) such that the axial locking of the valve body (13) in the valve housing (10) is released when a liquid pressure, generated by the liquid, exceeds a predetermined value, whereby the rotary movement, needed for unlocking, is generated from the lifting movement upon further opening of the valve body (13), that is to say by a compulsory guidance of at least one locking cam (17;28) along the helical guide path (24;30).

2. Valve according to claim 1, **characterised in that** the locking cam (17) engages in a groove (18) or opening in the valve body and hooks therein in a bayonet-like manner.

3. Valve according to one of the previous claims, **characterised in that** vane-like elements (31) are provided on the valve body (13) in the direction of flow, which elements retain the valve body (13) in a position orientated in opposition to the locking position.

4. Use of a valve according to one of the previous claims in an oil circuit for the supply of oil to an internal combustion engine, wherein the valve is initially in the open position upon setting the motor in operation and, as soon as oil (38) is conveyed by the oil pump (33), the valve disengages from the open position and remains disengaged.

## Revendications

1. Soupape pour des liquides composée d'un boîtier de soupape (10) et d'un corps de soupape (13) guidé dans le boîtier, au moins un moyen d'accrochage (16) sous la forme d'au moins une came d'accrochage (17, 28) étant prévue pour retenir le corps de soupape (13) en position d'ouverture dans le boîtier de soupape (10),
**caractérisée en ce que**
la soupape comporte en outre un chemin de glissement (24, 30) en forme d'hélice qui sous l'effet de la pression générée par le liquide, dépassant une certaine valeur, décroche le blocage axial du corps de soupape (13) dans le boîtier (10) en générant le mouvement de rotation nécessaire au décrochage à partir du mouvement de soulèvement lors de la poursuite de l'ouverture du corps de soupape (13) et cela par un guidage forcé d'au moins une came d'encliquetage (17, 28) sur le chemin de guidage (24, 30) en hélice.

2. Soupape selon la revendication 1,
**caractérisée en ce que**
la came d'encliquetage (17) vient prendre dans une rainure (18) ou une ouverture du corps de soupape et y est accrochée par une liaison de type baïonnette.

3. Soupape selon l'une quelconque des revendications précédentes,
**caractérisée en ce que**
des éléments (31) en forme d'ailettes sont prévus dans la direction d'arrivée du fluide sur le corps de soupape (13), ces éléments maintenant le corps de soupape (13) dans une position dirigée à l'opposé de la position d'encliquetage.

4. Application d'une soupape selon l'une quelconque des revendications précédentes à un circuit d'huile assurant l'alimentation en huile d'un moteur thermique, la soupape se trouvant tout d'abord en position d'ouverture lors de la mise en route du moteur et dès que l'huile (38) est débitée par la pompe à huile (33), elle décroche définitivement la position d'ouverture.
